# EUROPÄISCHE PATENTSCHRIFT

(11) **EP 4 276 559 B1**
(45) Veröffentlichungstag und Bekanntmachung des Hinweises auf die Patenterteilung: **28.01.2026**
(21) Anmeldenummer: 22172933.8
(22) Anmeldetag: 12.05.2022
(51) Int. Cl.: G05B 23/02, E02F 9/26

(54) **VERFAHREN UND SYSTEM ZUM ERMITTELN EINES KRITISCHEN MATERIALERMÜDUNGSZUSTANDES BEI TIEFBAUMASCHINEN**
METHOD AND SYSTEM FOR DETERMINING A CRITICAL MATERIAL FATIGUE CONDITION IN CIVIL ENGINEERING MACHINES
PROCÉDÉ ET SYSTÈME DE DÉTERMINATION D'UN ÉTAT CRITIQUE DE FATIGUE DE MATÉRIEL DANS UNE MACHINE DE TRAVAUX DE GÉNIE CIVIL

(43) Veröffentlichungstag der Anmeldung: 15.11.2023
(73) Patentinhaber: BAUER Maschinen GmbH, 86529 Schrobenhausen (DE)
(72) Erfinder: Dr.-Ing. EJTEHADI, Hesam, 86529 Schrobenhausen (DE)
(74) Vertreter: Wunderlich & Heim Patentanwälte PartG mbB

(56) Entgegenhaltungen:
- US-A1- 2018 058 046
- PAWLUS WITOLD ET AL: "Mitigation of Fatigue Damage and Vibration Severity of Electric Drivetrains by Systematic Selection of Motion Profiles", IEEE/ASME TRANSACTIONS ON MECHATRONICS, IEEE SERVICE CENTER, PISCATAWAY, NJ, US, vol. 21, no. 6, 6 December 2016 (2016-12-06), pages 2870 - 2880, XP011633543, ISSN: 1083-4435, [retrieved on 20161109], DOI: 10.1109/TMECH.2016.2573587

## Beschreibung

Die Erfindung betrifft ein Verfahren zum Ermitteln eines kritischen Materialermüdungszustandes bei Tiefbaumaschinen, welche als Bauteile einen Unterwagen, einen Oberwagen, einen Mast, ein, insbesondere am Mast gelagertes, Arbeitsgerät zur Bodenbearbeitung im Tiefbau, eine Hauptwinde zum Heben und Senken des Arbeitsgerätes mittels eines Hauptseils entlang des Mastes und/oder einer Vorschubeinrichtung für das Arbeitsgerät aufweist. Ferner werden Daten zumindest zu an der Hauptwinde auftretenden Kräften, an der Vorschubeinrichtung auftretenden Kräften und/oder am Arbeitsgerät auftretenden Drehmomenten ermittelt und aufgezeichnet.

Die Erfindung betrifft ferner ein System zum Ermitteln eines kritischen Materialermüdungszustandes bei einer Tiefbaumaschine, aufweisend eine Tiefbaumaschine mit einem Unterwagen, einem Oberwagen, einem Mast, einem, insbesondere am Mast gelagerten, Arbeitsgerät zur Bodenbearbeitung im Tiefbau, einer Hauptwinde zum Heben und Senken des Arbeitsgerätes mittels eines Hauptseils entlang des Mastes und/oder einer Vorschubeinrichtung. Ferner sind an der Tiefbaumaschine Sensoren vorgesehen, um Daten zumindest zu an der Hauptwinde auftretenden Kräften, an der Vorschubeinrichtung auftretenden Kräften und/oder am Arbeitsgerät auftretenden Drehmomenten zu ermitteln.

In der Regel trägt das Hauptseil das Arbeitsgerät, welches nicht zwingend am Mast geführt ist. Am Mast kann ein Schlitten vorgesehen sein, der durch die Vorschubeinrichtung betätigbar, insbesondere entlang des Mastes verfahrbar, ist. Weist das Arbeitsgerät beispielsweise ein Kellygestänge und einen Kraftdrehkopf auf, so können diese daher unabhängig voneinander gehoben und gesenkt werden. Der Mast kann beispielsweise als Mäkler oder auch als Teleskopmäkler ausgeführt sein. Er kann auch schräg in Bezug auf den Oberwagen vorgesehen sein.

Um einen sicheren Betrieb von Tiefbaumaschinen, wie beispielsweise Spezialdrehbohrgeräten, Seilbaggern oder Rammgeräten, zu gewährleisten, müssen sicherheitsrelevante Bauteile der Tiefbaumaschine auf Rissentwicklung in Stahlbaukomponenten der gesamten Maschine überprüft werden. Diese Rissentwicklung tritt durch Materialermüdung ein. Üblicherweise werden hierzu pauschale Inspektionsintervalle basierend auf den Betriebsstunden der Tiefbaumaschine vorgeschrieben. Diese müssen jedoch so bemessen sein, dass auch bei hochbelasteten Maschinen ausreichend oft eine Überprüfung durchgeführt wird.

Die Belastung der Tiefbaumaschine hängt unter anderem von der Bodenbeschaffenheit, dem verwendeten Bohrverfahren, dem eingesetzten Bohrwerkzeug, aber auch von der funktionellen Beanspruchung durch Gerätefahrer ab. Hierbei ist beispielsweise zu berücksichtigen, dass eine Tiefbaumaschine, welche lediglich in weichen Materialien, wie sandigen Böden eingesetzt wird, deutlich weniger Belastungen ausgesetzt ist, als eine Tiefbaumaschine, welche harten Fels bearbeitet.

Aus der DE 197 09 445 A1 oder der DE 103 10 116 A1 sind Verfahren für KFZ bekannt, mit denen Materialermüdungszustände oder Serviceintervalle bei Verschleiß oder Alterungsprozessen unterworfenen Komponenten abgeschätzt beziehungsweise ermittelt werden können.

Aus der US 2018/058046 A1 ist ein Überwachungssystem für ein Bohrgerät mit einem Mast, der zumindest in einer vertikalen Position arretierbar und durch Betätigung von Masthebungszylindern um eine Achse an einem festen Träger schwenkbar ist, bekannt. Es umfasst Dehnungsmessstreifen, eine Datenerfassungseinheit, einen Prozessor und Speicher sowie mindestens ein Ausgabegerät. Die Dehnungsmessstreifen befinden sich zumindest am Mast, vorzugsweise an störungsanfälligen Stellen. Die Datenerfassungseinheit erfasst Echtzeit-Dehnungsdaten von Dehnungs-, Druck- und Positionsmessgeräten. Der Prozessor und der Speicher verwenden die Daten zur Berechnung der tatsächlichen Belastung oder der kumulierten Schäden mittels einer Rainflow-Analyse, um einen Echtzeit-Betriebszustand des Bohrgeräts zu bestimmen. Das Ausgabegerät oder die Ausgabegeräte zeigen die momentane Spannung oder den akkumulierten Schaden mit entsprechenden Referenzwerten der maximal zulässigen Spannung oder des akkumulierten Schadens an. Der Referenzwert für die maximal zulässige Spannung, die mit der Dehnungsmessstreifenposition verbunden ist, kann aus einer Spannung berechnet werden, bei der das Gerät voraussichtlich versagen wird, entweder an der Dehnungsmessstreifenposition selbst oder an anderen nicht gemessenen Positionen, die nach einer Finite-Elemente-Analyse voraussichtlich am anfälligsten sind. Eine Warnung wird ausgegeben, wenn die Spannung oder der kumulierte Schaden einen entsprechenden Referenzwert überschreitet oder sich diesem annähert.

Aus PAWLUS WITOLD ET AL: "Mitigation of Fatigue Damage and Vibration Severity of Electric Drivetrains by Systematic Selection of Mbtion Profiles", IEEE/ASME TRANSACTIONS ON MECHATRONICS, IEEE SERVICE CENTER, PISCATAWAY, NJ, US, Bd. 21, Nr. 6, 6. Dezember 2016 (2016-12-06), Seiten 2870-2880, XP011633543, ist es bekannt, Schädigungszahlen eines motorbetriebenen Antriebs eines Greifers zum Montieren von Offshore-Bohrgestängen unter Berücksichtigung von Wöhlerkurven mittels Rainflow-Verfahren auf der Grundlage von gemessenen Bewegungsprofilen mit Drehmomenten und Geschwindigkeiten des Antriebs zu ermitteln.

Der Erfindung liegt die **Aufgabe** zugrunde, ein Verfahren sowie ein System anzugeben, welche eine effiziente Voraussage von Materialermüdung bei Tiefbaumaschinen ermöglichen.

Diese Aufgabe wird erfindungsgemäß durch ein Verfahren zum Ermitteln eines kritischen Materialermüdungszustandes bei Tiefbaumaschinen mit den Merkmalen des Anspruchs 1 sowie ein System zum Ermitteln eines kritischen Materialermüdungszustandes bei einer Tiefbaumaschine mit den Merkmalen des Anspruchs 12 gelöst.

Bevorzugte Ausführungsformen der Erfindung sind in den abhängigen Ansprüchen, in den Figuren und deren Erläuterungen angegeben.

Entsprechend der Erfindung ist vorgesehen, dass aus den erhaltenen Daten mittels eines Rainflow-Verfahrens Schädigungszahlen ermittelt werden. Diese Schädigungszahlen werden über einen Zeitraum zu einem aktuellen Schadenswert kumuliert. Der aktuelle Schadenswert wird mit einem rechnerisch ermittelten zulässigen Schadenswert für mindestens ein Bauteil verglichen und beim Annähern des aktuellen Schadenswertes an den ermittelten zulässigen Schadenswert wird ein kritischer Materialermüdungszustand festgestellt. Im Sinne der Erfindung kann unter zulässigem Schadenswert ein Schadenswert verstanden werden, der einen Zustand beschreibt, zu dem das Bauteil gerade noch ausreichend stabil ist.

Eine Grundidee der Erfindung kann darin gesehen werden, explizit Daten zu an der Hauptwinde auftretenden Kräften, an der Vorschubeinrichtung auftretenden Kräften und/oder am Arbeitsgerät auftretenden Drehmomenten zu ermitteln und aufzuzeichnen. Nach der Erfindung wurde erkannt, dass vorzugsweise bereits alleine Daten (erste Daten) aus einer dieser drei möglichen Quellen das zuverlässige Ermitteln von Schädigungszahlen, die einen Rückschluss auf Materialermüdungszustände bei Tiefbaumaschinen ermöglichen, zulassen. Obwohl grundsätzlich eine deutlich größere Anzahl von Daten beim Betrieb einer Tiefbaumaschine ermittelt werden kann, wurde entsprechend der Erfindung erkannt, dass diese drei Datenquellen die relevantesten sind und sogar die Auswertung lediglich einer dieser Quellen ausreichend ist, um einen kritischen Materialermüdungszustand festzustellen.

Hierzu wird entsprechend der Erfindung, basierend auf den ermittelten Daten, ein Rainflow-Verfahren beziehungsweise eine Rainflow-Analyse durchgeführt, um so Schädigungszahlen zu ermitteln. Das Rainflow-Verfahren wird alternativ auch als Rainflow-Zählung oder Rainflow-Zählverfahren bezeichnet. Die so ermittelten Schädigungszahlen werden aufaddiert, so dass ein aktueller Schädigungswert, der momentan vorliegt, ermittelt werden kann. Dies kann grundsätzlich abhängig von den zugrunde liegenden Daten für jedes Bauteil separat durchgeführt werden. Es kann aber auch über eine Gruppe von Bauteilen oder über das gesamte Tiefbaugerät gemeinsam durchgeführt werden.

Der so ermittelte aktuell vorliegende Schadenswert wird mit einem zulässigen Schadenswert der Bauteile oder der Bauteilgruppe verglichen. Dieser zulässige Schadenswert ist ein rechnerisch ermittelter Wert. Beim Annähern des aktuellen Schadenswertes an den zuvor ermittelten und/oder festgelegten zulässigen Schadenswert wird dann ein kritischer Materialermüdungszustand festgestellt.

Auf diese Weise wird erreicht, dass nicht mehr feste Überprüfungsintervalle eingehalten werden müssen, sondern dass flexibel, basierend auf den auftretenden Schädigungen, ein Wartungszeitpunkt zum einen prognostiziert werden kann, zum anderen auch nur dann eine Überprüfung durchgeführt werden muss, wenn ein Schwellenwert einer kritischen Materialermüdung erreicht wird.

Vorteilhaft ist es, wenn zum Ermitteln der Schädigungszahl pro Bauteil eine entsprechende Wöhlerlinie oder Wöhlerkurve berücksichtigt wird. Auf diese Weise kann aus den Schädigungszahlen ein Rückschluss auf die Schädigung des entsprechenden Bauteiles beziehungsweise einer entsprechenden Bauteilgruppe geschlossen werden. Grundlagen der im Maschinenbau üblichen Wöhlerkurve sind sogenannte Wöhlerversuche, die Aussagen über insbesondere die Dauerfestigkeit und Zeitfestigkeit ermöglichen. Hierbei fließt unter anderem das Material der entsprechenden Baugruppe, aber auch weitere Details, wie beispielsweise das exakte Design, mit ein.

Der ermittelte zulässige Schadenswert, den ein Bauteil aufweisen darf, bevor ein Materialermüdungszustand festgestellt wird, wird für jedes Bauteil mit Hilfe einer nichtlinearen Finite-Elemente-Methode ermittelt. Auf diese Weise kann, mit einem gewissen Rechenaufwand, für jedes beliebige Bauteil einer Tiefbaumaschine ein entsprechender Schwellenwert beziehungsweise zulässiger Schadenswert ermittelt werden, welcher in dem erfindungsgemäßen Verfahren eingesetzt werden kann.

Grundsätzlich können die Daten, die beispielsweise zu Kräften, welche an der Hauptwinde, an der Vorschubeinrichtung und/oder zu Drehmomenten, die am Arbeitsgerät auftreten, ermittelt werden, jeweils separat oder miteinander korreliert ausgewertet werden. Vorteil einer separaten Auswertung ist, dass hierzu weniger Rechenleistung benötigt wird, jedoch die Ergebnisse auch ungenauer sind. Demgegenüber nimmt die benötigte Rechenzeit bei einer korrelierten Auswertung deutlich zu. Sie liefert demgegenüber jedoch genaue Schädigungszahlen.

Anders ausgedrückt, kann die Schädigungszahlberechnung sowohl uniaxial oder multiaxial durchgeführt werden.

Wie bereits beschrieben, reicht es für das erfindungsgemäße Verfahren aus, Daten zu an der Hauptwinde auftretenden Kräften, Daten zu an der Vorschubeinrichtung auftretenden Kräften und/oder Daten zu am Arbeitsgerät auftretenden Drehmomenten für die weitere Auswertung heranzuziehen. Eine noch genauere Ermittlung der Schädigungszahlen und damit des Auftretens eines Materialermüdungszustandes kann jedoch erreicht werden, wenn weitere Daten (zweite Daten) verwendet werden. Diese können sich beispielsweise auf die Position des Arbeitsgerätes, insbesondere zum Mast, die Schwenkbeschleunigung des Oberwagens, die Fahrbeschleunigung der Tiefbaumaschine, die Zugkraft des Fahrwerkes des Unterwagens, an einer Hilfswinde auftretende Kräfte, die Mastneigung, die Ausladung, den Drehwinkel zwischen Ober- und Unterwagen, die Planumsneigung und den Verlauf der Bohrachse beziehen. Anders ausgedrückt können Daten zu einem der aufgezählten Elemente oder zu mehreren sowie allen aufgezählten Elementen für eine weitere Auswertung herangezogen werden. Die Hauptwinde, die Vorschubeinrichtung sowie die Hilfswinde können jeweils getrennt voneinander betätigt werden.

Grundsätzlich können die ermittelten Daten beliebig aufgezeichnet werden. Vorteilhaft ist es, wenn diese zum Aufzeichnen drahtlos an einen externen Speicher übertragen werden, wobei die Übertragung kontinuierlich und/oder diskontinuierlich durchgeführt wird. Es ist jedoch auch eine drahtgebundene Übertragung möglich. Bevorzugt wird aber eine drahtlose Übertragung, da so die Daten zu beliebigen Zeitpunkten ermittelt werden können und damit auch das Erreichen eines kritischen Materialermüdungszustandes möglichst genau vorhergesagt werden kann.

Die Daten selbst können auch lokal in der Tiefbaumaschine aufgezeichnet werden und in festen Intervallen drahtlos übertragen werden oder mittels einer Ausleseeinrichtung ausgelesen werden. Die Auswertung der Daten kann sowohl von einer in der Tiefbaumaschine vorgesehene Recheneinheit als auch von einer entfernt von der Tiefbaumaschine vorgesehenen Recheneinheit durchgeführt werden. Auch eine kombinierte Auswertung ist möglich.

In einer Weiterbildung kann basierend auf dem Annähern des aktuellen Schadenswertes an den ermittelten zulässigen Schadenswert eine Zeitperiode bis zum Erreichen des kritischen Materialermüdungszustandes ermittelt beziehungsweise prognostiziert werden. Hierbei ist es ferner möglich, dass zumindest einer aus einer Gruppe aufweisend einen Benutzer oder Bediener, einen Inhaber, einen Hersteller, ein Serviceunternehmen und einen Vermieter der Tiefbaumaschine eine festgelegte Zeitspanne vor dem Erreichen des kritischen Materialermüdungsstandes hiervon informiert wird. Anders ausgedrückt kann über den Verlauf der Entwicklung des Schadenswertes eine Prognose getroffen werden, wie lange es noch dauert, bis der kritische Materialermüdungszustand erreicht wird. Rechtzeitig, bevor dieser erreicht wird, kann dann beispielsweise der entsprechende Fahrzeugführer hiervon informiert werden. Es können jedoch auch andere Personen beziehungsweise Organisationen informiert werden. Beispielsweise kann der Hersteller der Tiefbaumaschine, welcher für die Wartung zuständig ist, der Vermieter oder auch ein Serviceunternehmen hiervon informiert werden. Welche Zeitspanne dies ist, kann einerseits beispielsweise durch den Hersteller der Tiefbaumaschine im Vorhinein festgelegt werden. Es ist jedoch auch möglich, dass die Zeitspanne individuell definiert werden kann. Individuell kann hierbei bedeuten, dass die Zeitspanne pro Bauteil jedoch auch beispielsweise pro Einsatzbereich festgelegt werden kann.

Ferner kann beim Annähern des aktuellen Schadenswertes an den ermittelten zulässigen Schadenswert die Tiefbaumaschine für bestimmte Arbeitsverfahren gesperrt werden. Dies kann bedeuten, dass das Ausführen dieser Verfahren über die Steuerung der Tiefbaumaschine verhindert wird oder nur nach einer zu bestätigenden Warnung möglich ist. Derartige Arbeitsverfahren können insbesondere Arbeitsverfahren sein, die erfahrungsgemäß einen besonders hohen Schadenswert verursachen, wie Bohren in harten Fels. Derartige Verfahren können beispielsweise durch Messung des erforderlichen Drehmoments oder die Auswahl bestimmter Werkzeuge erkannt werden, die am Gerät montiert werden. Die Sperre kann beispielsweise erst aufgehoben werden, wenn eine Überprüfung stattgefunden hat. Während der Sperre kann aber das Ausführen anderer Arbeitsverfahren mit zu erwartenden geringeren Schadenswerten weiterhin möglich sein.

Bei dem kritischen Materialermüdungszustand handelt es sich insbesondere um eine Rissbildung in Stahlbaukomponenten der Tiefbaumaschine. Eine Materialermüdung ist hierbei eindeutig von Wartungszuständen, wie dem notwendigen Austauschen des Öls eines Motors, eines Getriebeöls oder eines Hydrauliköls zu unterscheiden.

Bei einem erfindungsgemäßen System ist eine Auswerteeinrichtung vorgesehen, welche ausgebildet ist, aus den ermittelten Daten mittels eines Rainflow-Verfahrens Schädigungszahlen zu ermitteln, die Schädigungszahlen über einen Zeitraum zu einem aktuellen Schadenswert zu kumulieren, den aktuellen Schadenswert mit einem ermittelten und/oder hinterlegten zulässigen Schadenswert für mindestens ein Bauteil zu vergleichen und beim Annähern des aktuellen Schadenswertes an den ermittelten zulässigen Schadenswert einen kritischen Materialermüdungszustand festzustellen.

Anders ausgedrückt betrifft das erfindungsgemäße System eine Tiefbaumaschine, die entsprechende Sensoren aufweist, um Daten zu an der Hauptwinde auftretenden Kräften, Daten zu an der Vorschubeinrichtung auftretenden Kräften und/oder Daten zu am Arbeitsgerät auftretenden Drehmomenten zu ermitteln.

Ferner hat das System eine Auswerteeinrichtung, welche dazu ausgebildet ist, die wesentlichen Schritte des erfindungsgemäßen Verfahrens durchzuführen, um so einen kritischen Materialermüdungszustand vor dessen Eintritt festzustellen.

Hierbei ist es bevorzugt, wenn die Auswerteeinrichtung entfernt von der Tiefbaumaschine vorgesehen ist und wenn die Daten direkt oder indirekt an die Auswerteeinrichtung übertragbar sind. Beispielsweise kann sich die Auswerteeinrichtung auf zentralen Servern eines Serviceunternehmens oder des Herstellers der Tiefbaumaschine befinden. Hierdurch ist es möglich, mit einer Auswerteeinrichtung mehrere Tiefbaumaschinen zu betreuen, also entsprechende Schadenswerte und kritische Materialermüdungszustände festzustellen. Es ist aber auch möglich, dass die Auswerteeinrichtung in der Tiefbaumaschine integriert vorgesehen ist, so dass die Daten nicht weiter übertragen werden müssen.

Die von der Auswerteeinrichtung hierfür benötigte Daten können direkt von der Tiefbaumaschine über ein entsprechendes Kommunikationsnetzwerk an die Auswerteeinrichtung geschickt werden. Alternativ hierzu ist es auch möglich, dass diese Daten in einer Datenbank, die zu anderen Zwecken für die entsprechende Tiefbaumaschine vorhanden ist, aktiv von der Auswerteeinrichtung abgefragt werden.

In einer Weiterbildung ist die Auswerteeinrichtung ausgelegt, eine festgelegte Zeitperiode vor dem Feststellen eines kritischen Materialermüdungszustandes mindestens einen aus einer Gruppe aufweisend einen Benutzer, einen Bediener, einen Hersteller, einen Inhaber, ein Serviceunternehmen und einen Vermieter der Tiefbaumaschine hiervon zu informieren. Wesentlich ist hierbei, dass zumindest eine, ein Großteil oder alle in Bezug auf die Wartung beziehungsweise Betriebssicherheit der Tiefbaumaschine relevante Personen oder Organisationen informiert werden, dass bald ein kritischer Materialermüdungszustand eintritt. Auf diese Weise kann erreicht werden, dass eine notwendige Wartung erst dann durchgeführt wird, wenn auch der kritische Materialermüdungszustand beinahe erreicht ist und nicht nach vorher festgelegten Intervallen, die aus Sicherheitsgründen meist zu kurz bemessen sind.

Die Erfindung wird nachfolgend anhand eines bevorzugten Ausführungsbeispiels näher erläutert. In den Zeichnungen zeigen:
- Fig. 1: eine schematische Darstellung einer Tiefbaumaschine; sowie
- Fig. 2: ein Flussdiagramm zum Veranschaulichen des erfindungsgemäßen Verfahrens

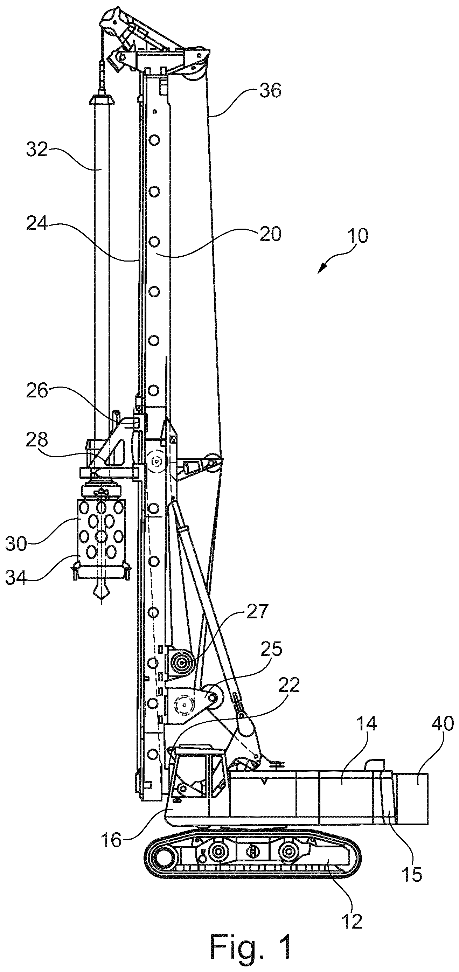

Eine Tiefbaumaschine 10, welche insbesondere als ein Bohrgerät ausgebildet ist, ist in Fig. 1 dargestellt. Ein Oberwagen 14 ist vorzugsweise drehbar an einem Unterwagen 12 mit einem Fahrwerk gelagert, welches als ein Raupenfahrwerk ausgebildet sein kann. An dem Oberwagen 14 mit einer Bedienkabine 16 kann an einer Vorderseite über einen Anlenkmechanismus 22 ein Mast 20 angeordnet sein. Der Mast 20 kann als ein Mäkler mit einer vorderen Linearführung 24 ausgebildet sein, entlang welcher ein Schlitten 26 mit einem Bohrantrieb 28 mittels einer Vorschubeinrichtung, die als Vorschubwinde 27 ausgeführt sein kann, und/oder einer Hauptwinde 25 vertikal verfahrbar und geführt sein kann.

Zum Bilden eines Arbeitsgerätes 30 ist vorzugsweise ein Bohrwerkzeug 34 an der Unterseite einer Kellystange 32 angeordnet. Die Kellystange 32 ist insbesondere über den Bohrantrieb 28 drehend antreibbar und über ein Seil 36 vertikal verstellbar am Mast 20 gehalten. Am Heck 40 des Oberwagens 14 können Gegengewichte 15 angeordnet werden.

Die Ausbildung einer Tiefbaumaschine 10 als ein Bohrgerät gemäß Fig. 1 ist lediglich beispielhaft, wobei die Tiefbaumaschine 10 auch in anderer Weise ausgestaltet sein kann, insbesondere mit anderen Arbeitsgeräten 30 zum Tiefbau, etwa mit einer Schlitzwandfräse, einer Ramme oder einem Rüttler.

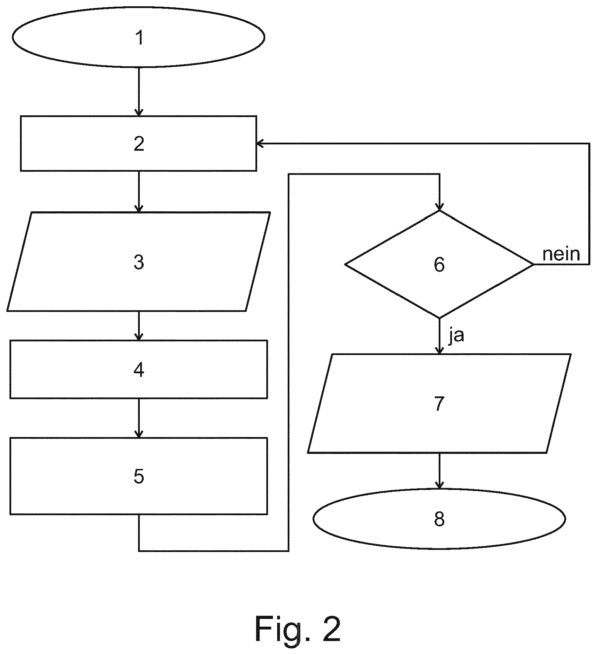

Unter Bezugnahme auf das Flussdiagramm nach Fig. 2 wird nun das erfindungsgemäße Verfahren zum Ermitteln eines kritischen Materialermüdungszustandes bei Tiefbaumaschinen näher erläutert.

Hierbei wird in Schritt 1 mit dem Betrieb der Tiefbaumaschine 10, bei der es sich beispielsweise um ein Bohrgerät oder ein Rammgerät handeln kann, begonnen.

Während des Betriebes werden in Schritt 2 Daten zu Betriebsparametern ermittelt. Bei den Daten kann es sich um Daten zu an der Hauptwinde 25 auftretenden Kräften, beispielsweise beim Anheben oder Absenken des Arbeitsgerätes 30 oder zu an der Vorschubeinrichtung auftretenden Kräften, beispielsweise beim Aufbringen von Druck auf das Arbeitsgerät, handeln. Es können auch Daten zu Drehmomenten, die am Arbeitsgerät beispielsweise aufgrund der Rotation gegen die Widerstände im Boden beim Bohren auftreten, gemessen und aufgezeichnet werden. Die Vorschubeinrichtung kann eine Vorschubwinde 27 oder eine Zylindereinrichtung aufweisen, so dass es sich bei den auftretenden Kräften sowohl um Zug- als auch bei einer Zylindereinrichtung um Drucckräfte handeln kann. Diese Kraft kann mittels einer Kraftmessachse, beispielsweise an einer Umlenkrolle des Seils, ermittelt werden.

Sofern Drehmomente ermittelt werden sollen, kann dies beispielsweise durch einen Drehmomentmessflansch erfolgen.

Ferner können auch zusätzlich oder alternativ Daten zu der Position des Kraftdrehkopfes des Arbeitsgerätes 30, der Schwenkbeschleunigung des Oberwagens 14 beim Schwenken, der generellen Fahrtbeschleunigung der Tiefbaumaschine 10, insbesondere der Losfahr- und Bremsbeschleunigung, der auftretenden Fahrzeugzugkraft, welche auch als Fahrwerkzugkraft am Unterwagen bezeichnet werden kann, der Zugkräfte an einer Hilfswinde, der absoluten Mastneigung, der Ausladung, dies bedeutet, die Mastposition relativ zum Unterwagen 12, der Drehposition des Oberwagens 14 zum Unterwagen 12, insbesondere zu dem Drehwinkel zwischen diesen beiden, der Planumsneigung, welche als absolute Oberwagenneigung zur Horizontalen definiert sein kann, der Bohrachse, insbesondere in Bezug auf den Mast sowie dem aktuell verwendeten Bodenbearbeitungsverfahren ermittelt und aufzeichnet werden. Grundsätzlich ist es möglich, einige, alle oder eine beliebige Kombination dieser Daten zu verwenden.

Anschließend werden in Schritt 3 die ermittelten Daten an eine Auswerteeinrichtung übertragen. Diese kann in oder an der Tiefbaumaschine 10 integriert ausgeführt sein. Es ist jedoch auch möglich, sie extern von dieser vorzusehen. An eine externe Auswerteeinrichtung kann die Datenübertragung bevorzugt drahtlos durchgeführt werden. Es ist jedoch auch möglich, die Daten in der Tiefbaumaschine 10 zwischenzuspeichern und periodisch mittels eines zumindest teilweise drahtgebundenen Datentransfers an die Auswerteeinrichtung zu übertragen.

In Schritt 4 wird in der Auswerteeinrichtung ein aktueller Schadenswert zu ausgewählten Bauteilen der Tiefbaumaschine 10 berechnet. Hierbei wird bevorzugt aus den Daten mittels eines Rainflow-Verfahrens eine Schädigungszahl ermittelt, die anschließend über einen Zeitraum des Betriebes addiert wird, um einen aktuellen Schadenswert zu erhalten.

In Schritt 5 wird in der Auswerteeinheit ein Vergleich zwischen dem aktuellen Schadenswert und einem vorab festgestellten zulässigen Schadenswert für das Bauteil durchgeführt. Dieser zulässige Schadenswert wird über eine Berechnung beispielsweise mit Hilfe einer nichtlinearen Finite-Elemente-Methode ermittelt.

In Schritt 6 wird das Ergebnis des Vergleiches zwischen dem ermittelten aktuellen Schadenswert und dem zulässigen Schadenswert bewertet. Ist der zulässige Schadenswert noch nicht erreicht, so wird das Verfahren an Schritt 2 fortgesetzt. Ist er erreicht oder nähert sich der ermittelte aktuelle Schadenswert dem zulässigen Schadenswert an, so wird das Verfahren in Schritt 7 fortgesetzt. Hierbei ist es nicht zwingend erforderlich, dass der zulässige Schadenswert bereits erreicht ist, sondern es ist auch möglich, die Entscheidungen entsprechend zu treffen, wenn noch ein gewisser Sicherheitswert zwischen dem aktuellen Schadenswert und dem zulässigen Schadenswert vorhanden ist, so dass ausreichend Zeit besteht, entsprechende Wartungs- und Kontrollschritte durchzuführen.

Hierzu wird in Schritt 7 ein Benutzer, ein Bediener, ein Inhaber, ein Betreiber, der Hersteller, ein Vermieter, ein Serviceunternehmen oder eine andere relevante Person oder Organisation informiert. Grundsätzlich können auch mehrere Personen oder Organisationen gemeinsam beziehungsweise gleichzeitig vom Erreichen des kritischen Materialermüdungszustandes, welcher durch Vergleich des aktuellen Schadenswertes mit dem zulässigen Schadenswert bestimmt werden kann, informiert werden. Dies kann beispielsweise durch eine elektronische Nachricht erfolgen. Dies kann auch zusätzlich oder ausschließlich in der Bedienerkabine angezeigt werden, z. B. gemeinsam mit einer kalkulierten Restdauer bis zum Erreichen des kritischen Materialermüdungszustands.

Es ist auch möglich, dass die Tiefbaumaschine für bestimmte Arbeitsverfahren, die erwartungsgemäß einen besonders hohen Schadenswert verursachen, gesperrt wird, bis eine Überprüfung stattgefunden hat, während andere Arbeitsverfahren, die erfahrungsgemäß geringe Schadenswerte verursachen, weiter freigegeben sind.

Anschließend wird in Schritt 8 veranlasst, dass die Tiefbaumaschine auf Materialermüdungen wie Risse, insbesondere an Stahlbauteilen, überprüft wird.

Somit kann mittels des erfindungsgemäßen Verfahrens und des erfindungsgemäßen Systems ein kritischer Materialermüdungszustand prognostiziert werden und rechtzeitig eine entsprechende Überprüfung durchgeführt werden, ohne dass die Überprüfung viel zu früh stattfindet.

## Patentansprüche

1. Verfahren zum Ermitteln eines kritischen Materialermüdungszustandes bei Tiefbaumaschinen (10), welche als Bauteile einen Unterwagen (12), einen Oberwagen (14), einen Mast (20), ein, insbesondere am Mast (20) gelagertes, Arbeitsgerät (30) zur Bodenbearbeitung im Tiefbau, eine Hauptwinde (25) zum Heben und Senken des Arbeitsgeräts (30) mittels eines Hauptseils (36) entlang des Mastes (20) und/oder eine Vorschubeinrichtung für das Arbeitsgerät (30) aufweist, wobei erste Daten zu
- an der Hauptwinde (25) auftretenden Kräften,
- an der Vorschubeinrichtung auftretenden Kräften und/oder
- am Arbeitsgerät (30) auftretenden Drehmomenten
ermittelt und aufgezeichnet werden,
wobei aus den erhaltenen ersten Daten mittels eines Rainflow-Verfahrens Schädigungszahlen ermittelt werden,
wobei die Schädigungszahlen über einen Zeitraum zu einem aktuellen Schadenswert kumuliert werden,
wobei der aktuelle Schadenswert mit einem vorab ermittelten zulässigen Schadenswert für mindestens eines der Bauteile verglichen wird,
wobei der vorab ermittelte zulässige Schadenswert pro Bauteil für das mindestens eine der Bauteile mit Hilfe einer nichtlinearen Finite Elemente Methode ermittelt wird, und
wobei beim Annähern des aktuellen Schadenswertes an den ermittelten zulässigen Schadenswert ein kritischer Materialermüdungszustand festgestellt wird.

2. Verfahren nach Anspruch 1,
**dadurch gekennzeichnet,**
**dass** zum Ermitteln der Schädigungszahlen pro Bauteil eine entsprechende Wöhlerlinie berücksichtigt wird.

3. Verfahren nach Anspruch 1 oder 2,
**dadurch gekennzeichnet,**
**dass** die ersten Daten jeweils separat ausgewertet werden.

4. Verfahren nach Anspruch 1 oder 2,
**dadurch gekennzeichnet,**
**dass** die ersten Daten miteinander korreliert ausgewertet werden.

5. Verfahren nach einem der Ansprüche 1 bis 4,
**dadurch gekennzeichnet,**
**dass** die Schädigungszahlen alleine aus den erhaltenen ersten Daten mittels des Rainflow-Verfahrens ermittelt werden.

6. Verfahren nach einem der Ansprüche 1 bis 4,
**dadurch gekennzeichnet,**
**dass** mindestens zweite Daten zu einem Element aus folgender Gruppe ebenfalls ermittelt und aufgezeichnet und bei der Ermittlung der Schädigungszahlen mittels des Rainflow-Verfahrens verwendet werden:
Position des Arbeitsgerätes (30), Schwenkbeschleunigung des Oberwagens (14), Fahrbeschleunigung der Tiefbaumaschine (10), Zugkraft des Fahrwerkes des Unterwagens (12), an einer Hilfswinde auftretende Kräfte, Mastneigung, Ausladung, Drehwinkel zwischen Ober- (14) und Unterwagen (12), Planumsneigung, Verlauf einer Bohrachse.

7. Verfahren nach einem der Ansprüche 1 bis 6,
**dadurch gekennzeichnet,**
**dass** die ermittelten Daten zum Aufzeichnen drahtlos an einen externen Speicher übertragen werden, wobei die Übertragung kontinuierlich und/oder diskontinuierlich durchgeführt wird.

8. Verfahren nach einem der Ansprüche 1 bis 7,
**dadurch gekennzeichnet,**
**dass** die ermittelten Daten lokal aufgezeichnet werden.

9. Verfahren nach einem der Ansprüche 1 bis 8,
**dadurch gekennzeichnet,**
**dass** basierend auf dem Annähern des aktuellen Schadenswertes an den ermittelten zulässigen Schadenswert eine Zeitperiode bis zum Erreichen des kritischen Materialermüdungszustandes ermittelt wird und
**dass** zumindest einer aus einer Gruppe aufweisend Benutzer, Bediener, Hersteller, Inhaber, Serviceunternehmen und Vermieter, eine festgelegte Zeitspanne vor dem Erreichen des kritischen Materialermüdungszustandes hiervon informiert wird.

10. Verfahren nach einem der Ansprüche 1 bis 9,
**dadurch gekennzeichnet,**
**dass** beim Annähern des aktuellen Schadenswertes an den ermittelten zulässigen Schadenswert die Tiefbaumaschine (10) für bestimmte Arbeitsverfahren, die einen besonders hohen Schadenswert verursachen, gesperrt wird.

11. Verfahren nach einem der Ansprüche 1 bis 10,
**dadurch gekennzeichnet,**
**dass** der kritische Materialermüdungszustand eine Rissbildung in Stahlbaukomponenten der Tiefbaumaschine ist.

12. System zum Ermitteln eines kritischen Materialermüdungszustandes bei einer Tiefbaumaschine (10), aufweisend als Bauteile einen Unterwagen (12), einen Oberwagen (14), einen Mast (20), ein, insbesondere am Mast (20) gelagertes, Arbeitsgerät (30) zur Bodenbearbeitung im Tiefbau, eine Hauptwinde (25) zum Heben und Senken des Arbeitsgerätes (30) mittels eines Hauptseils (36) entlang des Mastes (20) und/oder eine Vorschubeinrichtung,
wobei an der Tiefbaumaschine (10) Sensoren vorgesehen sind, um erste Daten zu
- an der Hauptwinde (25) auftretenden Kräften,
- an der Vorschubeinrichtung auftretenden Kräften und/oder
- am Arbeitsgerät (30) auftretenden Drehmomenten
zu ermitteln,
wobei eine Auswerteeinrichtung vorgesehen ist, welche ausgebildet ist,
- aus den ermittelten ersten Daten mittels eines Rainflow-Verfahrens Schädigungszahlen zu ermitteln,
- die Schädigungszahlen über einen Zeitraum zu einem aktuellen Schadenswert zu kumulieren,
- den aktuellen Schadenswert mit einem vorab ermittelten zulässigen Schadenswert für mindestens ein Bauteil zu vergleichen, wobei der vorab ermittelte zulässige Schadenswert pro Bauteil für das mindestens eine der Bauteile mit Hilfe einer nichtlinearen Finite Elemente Methode ermittelt wird, und
- beim Annähern des aktuellen Schadenswertes an den ermittelten zulässigen Schadenswert einen kritischen Materialermüdungszustand festzustellen.

13. System nach Anspruch 12,
- **dadurch gekennzeichnet,**
- **dass** die Schädigungszahlen alleine aus den erhaltenen ersten Daten mittels des Rainflow-Verfahrens ermittelt werden.

14. System nach Anspruch 12 oder 13,
**dadurch gekennzeichnet,**
**dass** die Auswerteeinrichtung entfernt von der Tiefbaumaschine vorgesehen ist und dass die Daten direkt oder indirekt an die Auswerteeinrichtung übertragbar sind.

15. System nach Anspruch 12, 13 oder 14,
**dadurch gekennzeichnet,**
**dass** die Auswerteeinrichtung ausgelegt ist, eine festgelegte Zeitperiode vor dem Feststellen eines kritischen Materialermüdungszustandes zumindest einen aus einer Gruppe aufweisend Benutzer, Bediener, Hersteller, Inhaber, Serviceunternehmen und Vermieter, der Tiefbaumaschine hiervon zu informieren.

## Claims

1. Method for determining a critical material fatigue state in civil-engineering machines (10), which comprises, as components, an undercarriage (12), an upper structure (14), a mast (20), a work device (30), in particular mounted on the mast (20), for ground working in civil engineering, a main winch (25) for raising and lowering the work device (30) by means of a main cable (36) along the mast (20), and/or a feed means for the work device (30),
wherein first data relating to
- forces arising on the main winch (25),
- forces arising on the feed means, and/or
- torques arising on the work device (30)
are determined and recorded,
wherein damage figures are determined from the obtained first data by means of a Rainflow Method,
wherein the damage figures are cumulated over a time period to a current damage value,
wherein the current damage value is compared with a previously determined allowable damage value for at least one of the components,
wherein the previously determined allowable damage value per component is determined for the at least one of the components with the aid of a nonlinear Finite Element Method, and
wherein a critical material fatigue state is identified when the current damage value is approached the determined allowable damage value.

2. Method according to claim 1,
**characterised in that**
a corresponding Wöhler curve is taken into account for determining the damage figures per component.

3. Method according to claim 1 or 2,
**characterised in that**
the first data are evaluated separately in each case.

4. Method according to claim 1 or 2,
**characterised in that**
the first data are evaluated in a manner correlated with one another.

5. Method according to any one of claims 1 to 4,
**characterised in that**
the damage figures are determined from the obtained first data alone, by means of the Rainflow Method.

6. Method according to any one of claims 1 to 4,
**characterised in that**
at least second data relating to one element from the following group are also determined and recorded, and used in the determination of the damage figures by means of the Rainflow Method:
position of the work device (30), pivot acceleration of the upper structure (14), travel acceleration of the civil-engineering machine (10), tractive force of the chassis of the undercarriage (12), forces arising on an auxiliary winch, mast inclination, radial range, rotational angle between the upper structure (14) and undercarriage (12), planum slope, course of a drilling axis.

7. Method according to any one of claims 1 to 6,
**characterised in that**
the determined data are transmitted wirelessly to an external memory, for recording, wherein the transmission is carried out continuously and/or discontinuously.

8. Method according to any one of claims 1 to 7,
**characterised in that**
the determined data are recorded locally.

9. Method according to any one of claims 1 to 8,
**characterised in that**
a time period until the critical material fatigue state is reached is determined based on the current damage value approaching the determined allowable damage value, and
**in that** a fixed time period before the critical material fatigue state is reached, at least one of a group comprising user, operator, manufacturer, owner, service company and lessor is informed thereof.

10. Method according to any one of claims 1 to 9,
**characterised in that**
when the current damage value approaches the determined allowable damage value, the civil-engineering machine (10) is blocked for certain work methods that cause a particularly high damage value.

11. Method according to any one of claims 1 to 10,
**characterised in that**
the critical material fatigue state is a crack formation in the steel construction components of the civil-engineering machine.

12. System for determining a critical material fatigue state in a civil-engineering machine (10), comprising, as components an undercarriage (12), an upper structure (14), a mast (20), a work device (30), in particular mounted on the mast (20), for ground working in civil engineering, a main winch (25) for raising and lowering the work device (30) by means of a main cable (36) along the mast (20), and/or a feed means,
wherein sensors are provided on the civil-engineering machine (10), for determining first data relating to
- forces arising on the main winch (25),
- forces arising on the feed means, and/or
- torques arising on the work device (30),
wherein an evaluation means is provided, which is configured
- to determine damage figures from the determined first data, by means of a Rainflow Method,
- to cumulate the damage figures over a time period to a current damage value,
- to compare the current damage value with a previously determined allowable damage value for at least one component, wherein the previously determined allowable damage value per component is determined for the at least one of the components with the aid of a nonlinear Finite Element Method, and
- to identify a critical material fatigue state when the current damage value approaches the determined allowable damage value.

13. System according to claim 12,
**characterised in that**
the damage figures are determined from the obtained first data alone, by means of the Rainflow Method.

14. System according to claim 12 or 13,
**characterised in that**
the evaluation means is provided remotely from the civil-engineering machine, and
**in that** the data can be transmitted directly or indirectly to the evaluation means.

15. System according to claim 12, 13 or 14,
**characterised in that**
the evaluation means is configured, a fixed time period before a critical material fatigue state is identified, to inform at least one of a group comprising user, operator, manufacturer, owner, service company and lessor of the civil-engineering machine, of this.

## Revendications

1. Procédé pour déterminer un état critique de fatigue de matériau dans des engins de génie civil (10) qui présentent en tant que composants une partie inférieure (12), une partie supérieure (14), un mât (20), un outil de travail (30), notamment monté sur le mât (20), pour le travail du sol dans le génie civil, un treuil principal (25) pour lever et abaisser l'outil de travail (30) au moyen d'un câble principal (36) le long du mât (20) et/ou un dispositif d'avance pour l'outil de travail (30),
où des premières données concernant
- des forces apparaissant au niveau du treuil principal (25),
- des forces apparaissant au niveau du dispositif d'avance et/ou
- des couples apparaissant au niveau de l'outil de travail (30) sont déterminées et enregistrées,
où des indices d'endommagement sont déterminés à partir des premières données obtenues au moyen d'un procédé Rainflow,
où les indices d'endommagement sont cumulés sur une période de temps pour obtenir une valeur d'endommagement actuelle,
où la valeur d'endommagement actuelle est comparée à une valeur d'endommagement admissible déterminée au préalable pour au moins un des composants,
où la valeur d'endommagement admissible déterminée au préalable par composant pour l'au moins un des composants est déterminée à l'aide d'une méthode des éléments finis non linéaire, et
où, lorsque la valeur d'endommagement actuelle se rapproche de la valeur d'endommagement admissible déterminée, un état critique de fatigue de matériau est détecté.

2. Procédé selon la revendication 1,
**caractérisé en ce qu'**
une courbe de Wöhler correspondante est prise en compte pour déterminer les indices d'endommagement par composant.

3. Procédé selon la revendication 1 ou 2,
**caractérisé en ce que**
les premières données sont évaluées séparément.

4. Procédé selon la revendication 1 ou 2,
**caractérisé en ce que**
les premières données sont évaluées en corrélation les unes avec les autres.

5. Procédé selon l'une quelconque des revendications 1 à 4,
**caractérisé en ce que**
les indices d'endommagement sont déterminés uniquement à partir des premières données obtenues au moyen du procédé Rainflow.

6. Procédé selon l'une quelconque des revendications 1 à 4,
**caractérisé en ce qu'**
au moins des deuxièmes données concernant un élément du groupe suivant sont également déterminées et enregistrées et sont utilisées lors de la détermination des indices d'endommagement au moyen du procédé Rainflow :
position de l'outil de travail (30), accélération de pivotement de la partie supérieure (14), accélération de déplacement de l'engin de génie civil (10), force de traction du châssis de la partie inférieure (12), forces apparaissant au niveau d'un treuil auxiliaire, inclinaison du mât, portée, angle de rotation entre la partie supérieure (14) et la partie inférieure (12), inclinaison de la plate-forme, trajectoire d'un axe de forage.

7. Procédé selon l'une quelconque des revendications 1 à 6,
**caractérisé en ce que**
les données déterminées sont transmises sans fil à une mémoire externe pour l'enregistrement, où la transmission est effectuée de manière continue et/ou discontinue.

8. Procédé selon l'une quelconque des revendications 1 à 7,
**caractérisé en ce que**
les données déterminées sont enregistrées localement.

9. Procédé selon l'une quelconque des revendications 1 à 8,
**caractérisé en ce que**,
sur la base du rapprochement de la valeur d'endommagement actuelle de la valeur d'endommagement admissible déterminée, une période de temps jusqu'à l'atteinte de l'état critique de fatigue de matériau est déterminée et
**en ce qu'**un certain temps avant l'atteinte de l'état critique de fatigue de matériau, au moins une personne d'un groupe présentant un utilisateur, un opérateur, un fabricant, un propriétaire, une entreprise de service et un loueur, en est informée.

10. Procédé selon l'une quelconque des revendications 1 à 9,
**caractérisé en ce que**,
lorsque la valeur d'endommagement actuelle se rapproche de la valeur d'endommagement admissible déterminée, l'engin de génie civil (10) est bloqué pour certains procédés de travail qui provoquent une valeur d'endommagement particulièrement élevée.

11. Procédé selon l'une quelconque des revendications 1 à 10,
**caractérisé en ce que**
l'état critique de fatigue de matériau est une fissuration dans des composants en acier de l'engin de génie civil.

12. Système pour déterminer un état critique de fatigue de matériau dans un engin de génie civil (10), présentant en tant que composants une partie inférieure (12), une partie supérieure (14), un mât (20), un outil de travail (30), notamment monté sur le mât (20), pour le travail du sol dans le génie civil, un treuil principal (25) pour lever et abaisser l'outil de travail (30) au moyen d'un câble principal (36) le long du mât (20) et/ou un dispositif d'avance,
où des capteurs sont prévus sur l'engin de génie civil (10) pour déterminer des premières données concernant
- des forces apparaissant au niveau du treuil principal (25),
- des forces apparaissant au niveau du dispositif d'avance et/ou
- des couples apparaissant au niveau de l'outil de travail (30),
où un dispositif d'évaluation est prévu, qui est réalisé pour
- déterminer des indices d'endommagement à partir des premières données déterminées au moyen d'un procédé Rainflow,
- cumuler les indices d'endommagement sur une période de temps pour obtenir une valeur d'endommagement actuelle,
- comparer la valeur d'endommagement actuelle à une valeur d'endommagement admissible déterminée au préalable pour au moins un composant, où la valeur d'endommagement admissible déterminée au préalable par composant pour l'au moins un des composants est déterminée à l'aide d'une méthode des éléments finis non linéaire, et
- détecter un état critique de fatigue de matériau lorsque la valeur d'endommagement actuelle se rapproche de la valeur d'endommagement admissible déterminée.

13. Système selon la revendication 12,
- **caractérisé en ce que**
- les indices d'endommagement sont déterminés uniquement à partir des premières données obtenues au moyen du procédé Rainflow.

14. Système selon la revendication 12 ou 13,
**caractérisé en ce que**
le dispositif d'évaluation est prévu à distance de l'engin de génie civil et **en ce que** les données peuvent être transmises directement ou indirectement au dispositif d'évaluation.

15. Système selon la revendication 12, 13 ou 14,
**caractérisé en ce que**
le dispositif d'évaluation est conçu pour, un certain temps avant la détection d'un état critique de fatigue de matériau, en informer au moins une personne du groupe présentant un utilisateur, un opérateur, un fabricant, un propriétaire, une entreprise de service et un loueur.
